# EUROPEAN PATENT APPLICATION

(11) **EP 1 725 028 A1**
(43) Date of publication of application: **22.11.2006**
(21) Application number: 05257511.5
(22) Date of filing: 06.12.2005
(51) Int. Cl.: H04N 5/74, H04N 9/31, G02B 26/10

(54) **Image distortion prevention apparatus and method**

(30) Priority: 03.05.2005 KR 2005037052
(71) Applicant: Samsung Electronics Co., Ltd., Suwon-si Gyeonggi-do (KR)
(72) Inventor: Mun, Yong-kweun, Giheung-eub Yongin-si Gyeonggi-do (KR); Kim, Jung-woo, Yongin-si Gyeonggi-do (KR)
(74) Representative: Greene, Simon Kenneth

(57) **Abstract**

Provided is an apparatus for preventing the distortion of an image. The apparatus includes a signal insertion portion inserting a sensing signal in an image signal that has information on an image and outputting the image signal in which the sensing signal is inserted as a scanning signal. A scanning portion generates light corresponding to the scanning signal and scans the light while operating in response to a drive signal that determines a direction for scanning the light. A detection portion senses the scanned light and detects the sensing signal. A sensing condition reflection portion checks whether the sensing signal matching a preset sensing condition is detected and resets at least one of the image signal and the drive signal in response to a result of the check.

## Description

The present invention relates to the prevention of distortion of an image, and more particularly, to an apparatus and method for preventing the distortion of an image by optically scanning a scanning light which is the result of insertion of a sensing signal in an image signal, checking whether the sensing signal matching a sensing condition is detected when sensing the scanning light, and resetting at least one of the image signal and a drive signal in response to the result of the check.

To embody an image through optical scanning as in a laser projection TV, an optical scanner for scanning light while determining a direction in which the light is scanned is needed. Since the optical scanner is driven by a drive signal, the direction in which the light is scanned is controlled by the drive signal. The light is generated in response to an image signal having information on the image.

The optical scanner responds to the drive signal after predetermined time, not instantly. Hereinafter, the predetermined time is referred to as a response time. The response time is determined by a resonance frequency of the optical scanner. The response time is anticipated before the optical scanning is performed. The phase of the image signal is predetermined considering the anticipated response time. An image signal having the predetermined phase is generated.

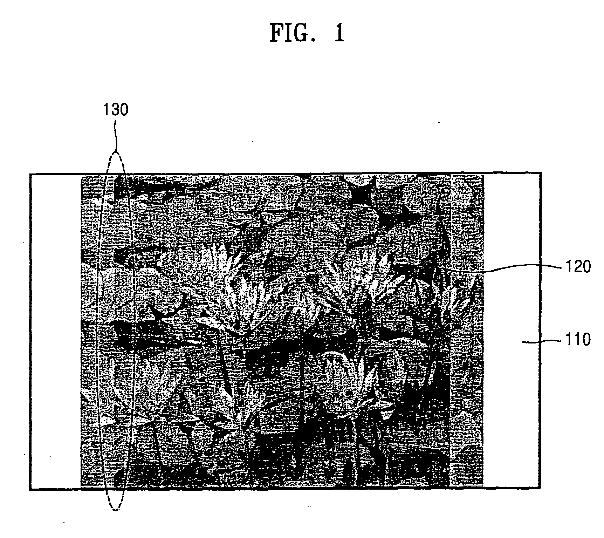

FIG. 1 is a view for explaining the distortion of an image. Referring to FIG. 1, an image 120 is generated on a screen 110 by the light scanned onto the screen 131. When the phase of the image signal is determined without considering the response time, a distorted image 130 is generated so that the image is finally distorted. Consequently, the accurate anticipation of the response time is needed to prevent the distortion of the image.

Since the image signal is generally generated with a variety of patterns, the strength of the light incident on the optical scanner is not constant. In this case, the temperature of the optical scanner is not constantly maintained and the resonance frequency of the optical scanner changes according to the lapse of time. As a result, even when the response time is accurately anticipated at the initial stage, the anticipation becomes inaccurate as time lapses.

Thus, a conventional optical scanning apparatus which generates an image by scanning light has a problem that the distortion of an image cannot be avoided in spite of the accurate anticipation at the initial stage with respect to the response time.

### SUMMARY OF THE INVENTION

The present invention provides an apparatus for preventing image distortion by optically scanning a scanning light which is the result of insertion of a sensing signal in an image signal, checking whether the sensing signal matching a sensing condition is detected when sensing the scanning light, and resetting at least one of the image signal and a drive signal in response to the result of the check.

The present invention provides a method for preventing image distortion by optically scanning a scanning light which is the result of insertion of a sensing signal in an image signal, checking whether the sensing signal matching a sensing condition is detected when sensing the scanning light, and resetting at least one of the image signal and a drive signal in response to the result of the check.

The present invention provides a computer-readable recording medium recording a program for causing a computer to perform the method for preventing image distortion by optically scanning a scanning light which is the result of insertion of a sensing signal in an image signal, checking whether the sensing signal matching a sensing condition is detected when sensing the scanning light, and resetting at least one of the image signal and a drive signal in response to the result of the check.

According to an aspect of the present invention, an apparatus for preventing the distortion of an image comprises a signal insertion portion inserting a sensing signal in an image signal that has information on an image and outputting the image signal in which the sensing signal is inserted as a scanning signal, a scanning portion generating light corresponding to the scanning signal and scanning the light while operating in response to a drive signal that determines a direction for scanning the light, a detection portion sensing the scanned light and detecting the sensing signal, and a sensing condition reflection portion checking whether the sensing signal matching a preset sensing condition is detected, and resetting at least one of the image signal and the drive signal in response to a result of the check.

According to another aspect of the present invention, a method for preventing the distortion of an image is achieved by inserting a sensing signal in an image signal that has information on an image and generating the image signal in which the sensing signal is inserted as a scanning signal, generating light corresponding to the scanning signal and scanning the light while being controlled by a drive signal that determines a direction for scanning the light, sensing the scanned light and detecting the sensing signal, determining whether the sensing signal matching a preset sensing condition is detected, and when the sensing signal matching the preset sensing condition is not detected, resetting at least one of the image signal and the drive signal.

According to another aspect of the present invention, there is provided a computer-readable recording medium recording a program for causing a computer to perform a method for preventing the distortion of an image, the method being achieved by inserting a sensing signal in an image signal that has information on an image and generating the image signal in which the sensing signal is inserted as a scanning signal, generating light corresponding to the scanning signal and scanning the light while being controlled by a drive signal that determines a direction for scanning the light, sensing the scanned light and detecting the sensing signal, determining whether the sensing signal matching a preset sensing condition is detected, and when the sensing signal matching the preset sensing condition is not detected, resetting at least one of the image signal and the drive signal.

### BRIEF DESCRIPTION OF THE DRAWINGS

The above and other features and advantages of the present invention will become more apparent by describing in detail preferred embodiments thereof with reference to the attached drawings in which:
FIG. 1 is an image for explaining the distortion of an image;
FIG. 2 is a block diagram of the configuration of an apparatus for preventing image distortion according to an embodiment of the present invention;
FIG. 3 is a view for explaining the principle of generating an image through optical scanning;
FIGS. 4A and 4B are views for explaining the optical scanning when no image distortion phenomenon occurs;
FIG. 5 is a graph showing the frequency response property of the scanning portion shown in FIG. 2;
FIG. 6A is a view for explaining the optical scanning when the image distortion phenomenon occurs;
FIG. 6B is a waveform diagram of the sensing signal inserted in the image signal to detect whether the image distortion phenomenon has occurred;
FIGS. 7A, 7B, 7C, and 7D are views for explaining the possible embodiments of the display portion and the detection portion shown in FIG. 2; and
FIG. 8 is a flow chart for explaining a method of preventing image distortion according to an embodiment of the present invention.

### DETAILED DESCRIPTION OF THE INVENTION

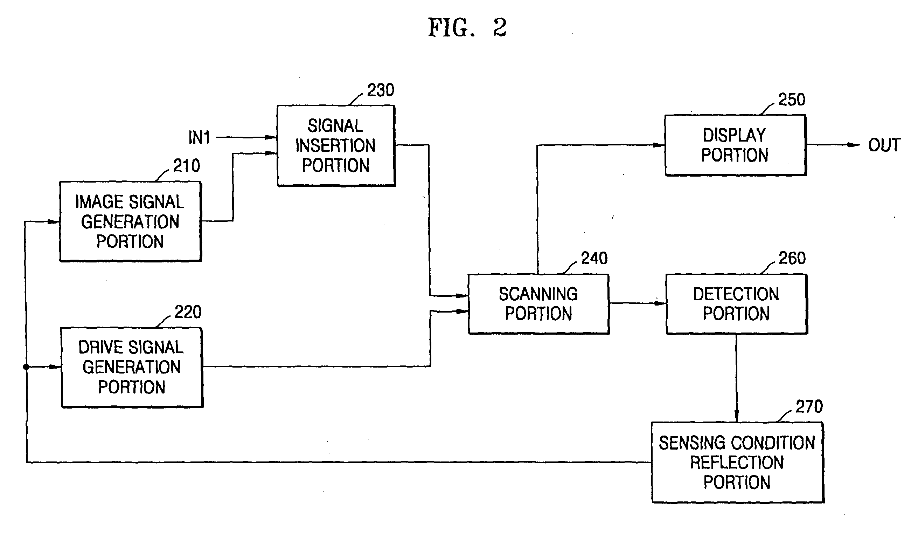

Referring to FIG. 2, an apparatus for preventing image distortion according to an embodiment of the present invention includes an image signal generation portion 210, a drive signal generation portion 220, a signal insertion portion 230, a scanning portion 240, a display portion 250, a detection portion 260, and a sensing condition reflection portion 270. "IN1" denotes a sensing signal while "OUT" denotes an image being displayed.

The image signal generation portion 210 generates an image signal having information on an image. Also, the drive signal generation portion 220 generates a drive signal driving an optical scanner (not shown).

The signal insertion portion 230 inserts a sensing signal IN1 in the generated image signal. The sensing signal IN1 is sporadically generated by a sensing signal generation portion (not shown). The sensing signal IN1 is generated to have an amplitude different from that of a previously generated sensing signal. The signal insertion portion 230 can insert the sensing signal IN1 in a period of the image signal where no signal exists. The image signal in which the sensing signal IN1 is inserted is referred to as a scanning signal. That is, the signal insertion portion 230 generates the scanning signal.

The scanning portion 240 includes a light generation portion (not shown) for generating light in response to the scanning signal generated by the signal insertion portion 230 and the optical scanner for scanning the generated light by being operated according to the drive signal which determines a direction in which the generated light is scanned. The light generated by the scanning portion 240 indicates the scanning signal. In detail, the light generation portion of the scanning portion 240 determines the strength of the light according to the scanning signal and generates the light having the determined strength. The optical scanner of the scanning portion 240 scans the light in a bi-directional scanning method.

The optical scanner of the scanning portion 240 operates in response to a given drive signal. Consequently, the direction in which the optical scanner scans the light and the responded phase of the optical scanner are determined by the drive signal. The optical scanner acts as a mirror and scans the light by reflecting the incident light. Thus, the scanning direction is determined according to the phase of the optical scanning.

The optical scanner responds to the given drive signal after response time, not instantly. That is, the optical scanner responds to the given drive signal with a predetermined difference in phase. The phase difference is determined by a resonance frequency Wo of the optical scanner. The image signal generation portion 210 anticipates the response time before the optical scanner scans the light, predetermines the phase considering the anticipated response time, and generates an image signal having the determined phase. Also, the drive signal generation portion 220 generates a drive signal having the resonance frequency Wo of the optical scanner.

The display portion 250 receives the light scanned by the optical scanner of the scanning portion 240 and displays an image OUT. For this purpose, the display portion 250 may be a screen (not shown) which receives and displays the scanned light.

The detection portion 260 detects the sensing signal IN1 by sensing the light scanned by the scanning portion 240. The detection portion 260 then stores information related to the time when the sensing signal IN1 is detected and the magnitude of the detected sensing signal IN1 in a specific storage. Also, the detection portion 260 may be a plurality of detection devices (not shown) which are separated from one another or a single detection device (not shown). The detection device detects the sensing signal IN1.

The sensing condition reflection portion 270 includes a checking portion (not shown) for checking whether the sensing signal IN1 matching a preset sensing condition is detected and a feedback portion (not shown) for resetting at least one o the image signal or drive signal in response to the result of the check. The sensing condition can includes at least one of the conditions on the detection time and detected amplitude. Also, the resetting of the image signal denotes resetting of the phase of the image signal and the resetting of the drive signal denotes the resetting of the phase of the drive signal.

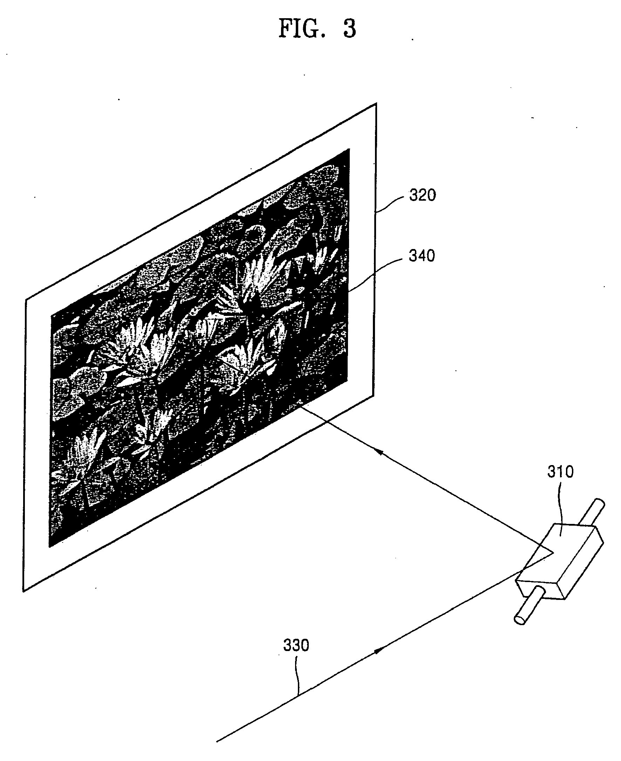

FIG. 3 is a view for explaining the principle of generating an image through optical scanning. Referring to FIG. 3, the optical scanner 310 of the scanning portion 240 scans the light 330 onto the screen 320 by reflecting the light 330 incident on the optical scanner 240 at a predetermined angle. The predetermined angle is controlled by the drive signal that drives the optical scanner 310. As the light 310 is scanned, a predetermined image 340 is formed on the screen 320.

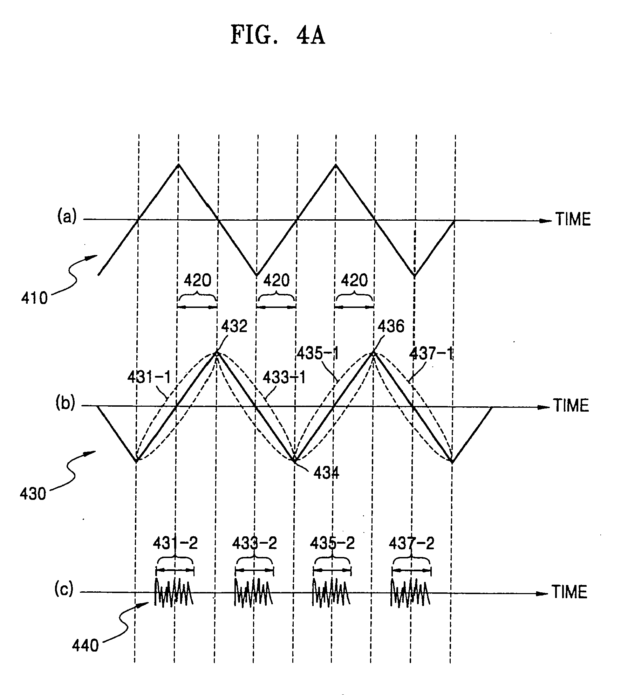

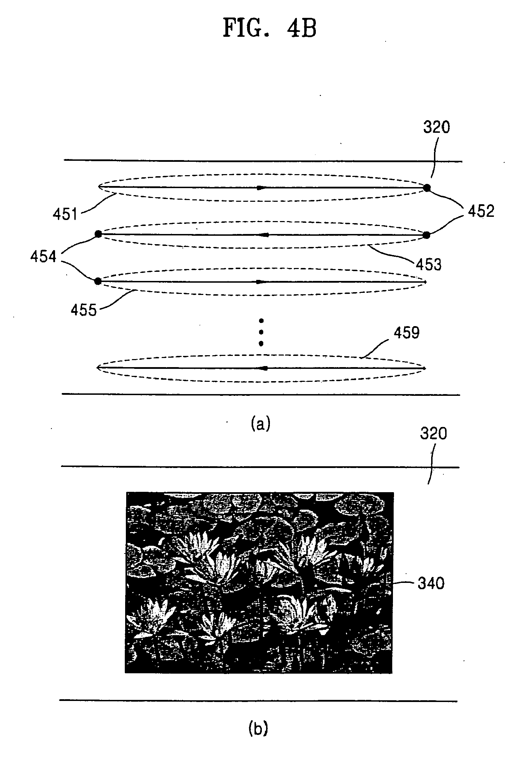

FIGS. 4A and 4BB are views for explaining the optical scanning when no image distortion phenomenon occurs. In detail, waveform diagrams "(a)", "(b)", and "(c)" of FIG. 4A show the waveforms of a drive signal 410, a phase 430 of the optical scanner 310 with respect to time, and an image signal 440, respectively, when the image distortion phenomenon does not occur. FIG. 4B is a view for explaining the optical scanning performed with respect to the screen 320. The vertical axes of the waveforms diagrams (a) and (c) of FIG. 4A indicate a voltage while the vertical axis of the waveform diagram (b) of FIG. 4A indicates the responded phase 430 of the optical scanner 310.

As shown in the FIGS. 4A and 4B, the optical scanner 310 responds, not instantly, but with a particular time difference 420 which is referred to as the response time, to the drive signal 410 that is given, as described above. The time difference means the phase difference.

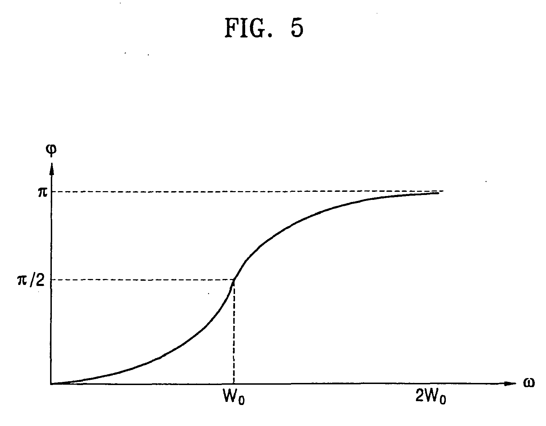

FIG. 5 is a graph showing the frequency response characteristic of the optical scanner 310 of the scanning portion 240. A letter "W" on the horizontal axis denotes a resonance frequency of the optical scanner 310 while a symbol "Φ" on the vertical axis denotes the phase difference between the drive signal 410 and the responded phase 430. A symbol "W₀" denotes the original resonance frequency of the optical scanner 310. The original resonance frequency means a resonance frequency of the optical scanner 310 when the optical scanner 310 is not in operation. That is, when the current resonance frequency of the optical scanner 310 is W₀, the time difference 420 denotes π/2.

The optical scanner 310 can scan the light in both directions to the left and to the right from an uppermost end 451 to a lowermost end 459 of the screen 320. The optical scanner 310 can scan the light horizontally with respect to the screen 320. That is, the optical scanner 310 horizontally scans the light from the left to the right (hereinafter, referred to as "right scanning") or from the right to the left (hereinafter, referred to as "left scanning"). The right scanning and the left scanning can be alternately performed.

When the waveform diagram (b) of FIG. 4A and a diagram (a) of FIG. 4B are compared, when the responded phase is a line 431-1, the light is right-scanned like a line 451. Likewise, when the responded phase is a line 433-1, the light is left-scanned like a line 453. When the responded phase 430 is a point 432, 434, or 436, the changing aspect of the responded phase 430 changes at each point. Also, the light is not incident on the optical scanner 310 at that moment.

That is, when the responded phase 430 is at the point 432, the light is not scanned like at a point 452. Also, the direction of scanning is changed from the right scanning 451 to the left scanning 453 at the moment when the responded phase 430 is at the point 432. Likewise, when the responded phase 430 is at the point 434, the light is not scanned like at a point 454. Also, the direction of scanning is changed from the left scanning 453 to the right scanning 455 at the moment when the responded phase 430 is at the point 434. As a result, the responded phase 430 includes the responded phases in the optical scanning section 431-1, 433-1, 435-1, or 437-1 and the responded phases in the non-optical scanning section 432, 434, or 436.

According to the waveform diagram (c) of FIG. 4A, the image signal 440 includes image signals in a signal section 431-2, 433-2, 435-2, or 437-2 and an image signal in a non-signal section. The time zone of the signal section 431-2, 433-2, 435-2, or 437-2 is included in a time zone of the responded phase 430 of the optical scanning section 431-1, 433-1, 435-1, or 437-1, preferably, at the center of each time zone.

As shown in the waveform digammas (b) and (c) of FIGS 4A, when the time zone of the signal section 431-2, 433-2, 435-2, or 437-2 of the image signal is included in the time zone (hereinafter, referred to as "optical scanning time zone") of the responded phase of the optical scanning section 431-1, 433-1, 435-1, or 437-1, all lights scanned in the optical scanning time zone do not generate the image 340. that is, according to an image (b) of FIG. 4B, the horizontal width of the image 340 that is generated is smaller than that of each of the lines 451, 453, 45, and 459.

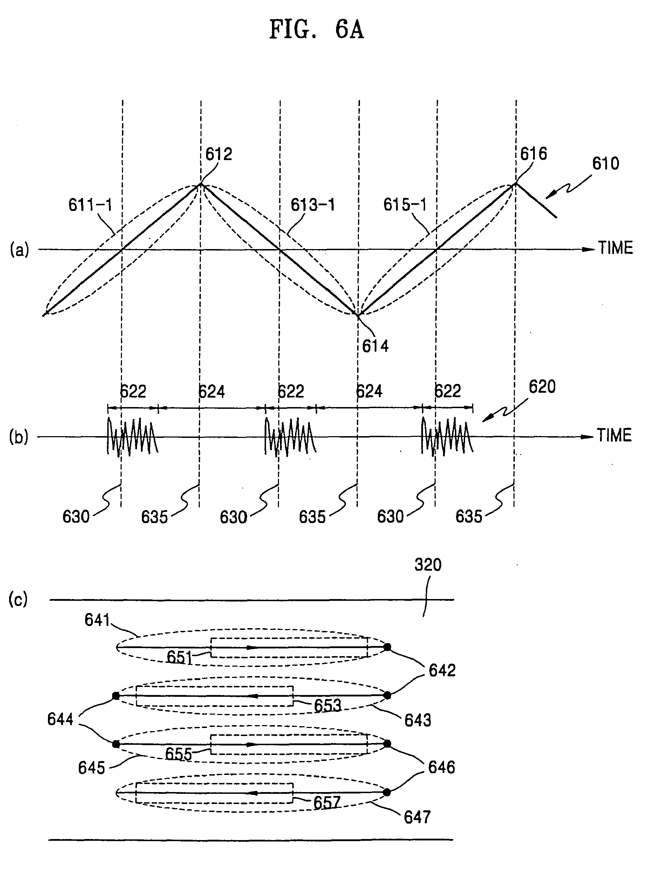

FIG. 6A is a view for explaining the optical scanning when the image distortion phenomenon occurs. In detail, a waveform diagram (a) of FIG. 6A shows the waveform of a responded phase 610 of the optical scanner 310, a waveform diagram (b) of FIG. 6A shows the waveform of an image signal 620, and a reference view (c) of FIG. 6A shows the optical scanning performed with respect to the screen 320. The vertical axis of the waveform diagram (a) of FIG. 6A denotes the responded phase of the optical scanner 310 while the vertical axis of the waveform diagram (b) of FIG. 6A denotes the voltage of the image signal 620.

When the responded phase 610 of the optical scanner 310 is a line 611-1, the light is right-scanned like a line 641. Likewise, when the responded phase 610 of the optical scanner 310 is a line 613-1, the light is left-scanned like a line 643. Also, when the responded phase 610 of the optical scanner 310 is a line 615-1, the light is right-scanned like a line 645.

When the responded phase 610 of the optical scanner 310 is at a point 612, 614, or 616, the responded phase 610 changes at each point. Also, the light is not incident on the optical scanner 310 at that moment. That is, when the responded phase 610 is at the point 612, the light is not scanned like at a point 642. Also, the direction of scanning is changed from the right scanning 641 to the left scanning 643 at the moment when the responded phase 610 is at the point 612. Likewise, when the responded phase 610 is at the point 614, the light is not scanned like at a point 644. Also, the direction of scanning is changed from the left scanning 643 to the right scanning 645 at the moment when the responded phase 610 is at the point 614. When the waveform diagrams (a) and (b) of FIG. 6A are compared with each other, unlike FIG. 4A, the time zone of a signal section 622 is not located at the center of the time zone of the optical scanning section 611-1, 613-1, or 615-1, but deviated from the center toward a positive time axis direction.

As the optical scanning is performed, the internal temperature of the optical scanner 310 changes. This is because the image signal 620 is typically generated with a variety of patterns and the strength of the light 330 incident on the optical scanner 310 is not constant.

When the temperature of the optical scanner 310 is not constantly maintained, the resonance frequency of the optical scanner 310 changes as time passes so that the phase difference between the drive signal and the responded phase 610 changes as time passes.

Thus, even when the image signal is initially generated such that the time zone of the signal section 622 is located at the center of the time zone of the optical scanning section 611-1, 613-1, or 615-1, the time zone of the signal section is deviated from the center of the time zone of the optical scanning section as time passes while the optical scanning is performed.

For example, it is assumed that the image signal is generated based on an assumption that the phase difference between the drive signal and the responded phase 610 is π/2 and accordingly the time zone of the signal section 622 is located at the center of the time zone of the optical scanning section 611-1, 613-1, or 615-1. In this case, the resonance frequency of the optical scanner 310 changes as time passes so that the phase difference of π/2 is not maintained any longer. Thus, the time zone of the signal section 622 is no longer located at the center of the time zone of the optical scanning section 611-1, 613-1, or 615-1.

According to the reference view (c) of FIG. 6A, the optical scanner 310 alternately performs the right scanning 641 or 645 and the left scanning 643 or 647 horizontally from the uppermost end of the screen 320. As described above, the image 340 is not generated in the entire area of the optical scanning section 611-1, 613-1, or 615-1 on the screen 320. That is, the area of the screen 320 where the image 340 is generated is an area where the image signal 620 of the signal section 622 is scanned.

As shown in the waveform diagrams (a) and (b) of FIG. 6A, when the time zone of the signal section 622 is deviated in the direction toward a positive time axis from the center of the time zone of the optical scanning sections 611-1, 613-1, or 615-1, the time when the image signal 620 of the signal section 622 starts to scan light onto the screen 320 is delayed than the original time. As a result, the area of the screen 320 where the image 340 is generated is deviated to the right (651 or 655) for the right scanning case and to the left (653 or 657) for the left scanning case, which is clearly shown when the image (b) of FIG. 48 and the reference view (c) of FIG. 6A are compared to each other. The deviation results in the distortion of the image 340 generated on the screen 320.

Reference numerals 651, 653, 655, or 657 denote the areas on the screen 320 where the image 340 is generated. These areas are referred to as the first image area 651, the second image area 653, the third image area 655, and the fourth image area 657, respectively. That is, the whole of the image 340 is made up by the first through fourth areas 651 through 657.

One of four boundaries of each of the areas 651 through 657 that is disposed at the leftmost side is referred to as a reference line for the convenience of explanation. As shown in FIG. 6A, the reference lines of all areas 651 through 657 are not flushed with one another, which means the image is distorted. To prevent the distortion of an image, the present invention suggests the following technique. That is, according to the present invention, the image signal 620 in which the sensing signal IN1 670 is inserted is generated as a scanning signal to prevent the distortion of an image.

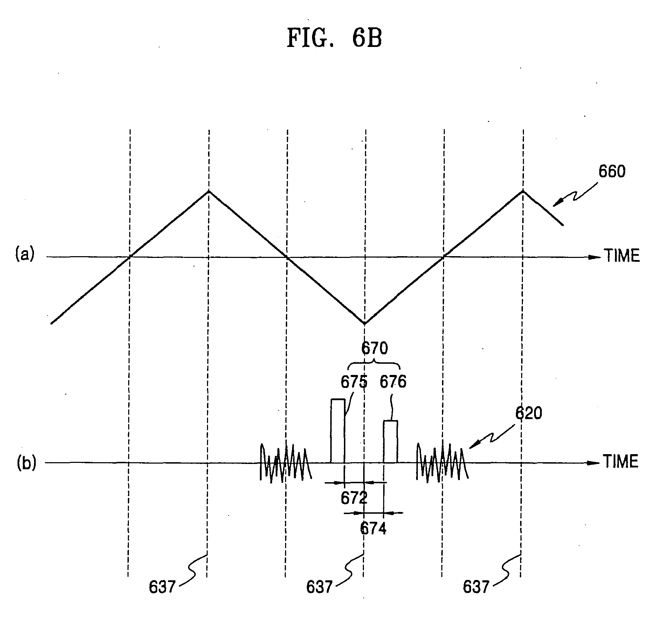

FIG. 6B is a waveform diagram of the sensing signal 670 inserted in the image signal 620 to detect whether the image distortion phenomenon has occurred. In FIG. 6B, waveform diagrams (a) and (b) indicate a responded phase 660 and a scanning signal, respectively, when the image distortion is not generated. A line 637 indicates a moment when the changing aspect of the responded phase 660 changes. A period 672 (hereinafter, referred to as a "first separate time") indicates the time from a time point when the signal section of the sensing signal 670 ends to a time point of a line 637. A period 674 (hereinafter, referred to as a "second separate time") indicates the time from the time point of the line 637 to a time point when the signal section of the sensing signal 670 starts.

Since the sensing signal 670 is inserted in the image signal 620, the detection portion 260 can detect the sensing signal 670 by sensing the scanned light. Then, the checking portion of the sensing condition reflection portion 270 checks whether the sensing signal 670 matching a preset sensing condition is detected. For this purpose, the sensing condition reflection portion 270 includes a sensing conduction storing portion (not shown) to store the sensing condition.

As shown in the waveform diagram (b) of FIG. 6B, the sensing signal 670 is sporadically generated on the time of the non-signal section 624. The magnitude of the sensing signal 670 that is presently generated can be different from or identical to that of the preceding sensing signal 670.

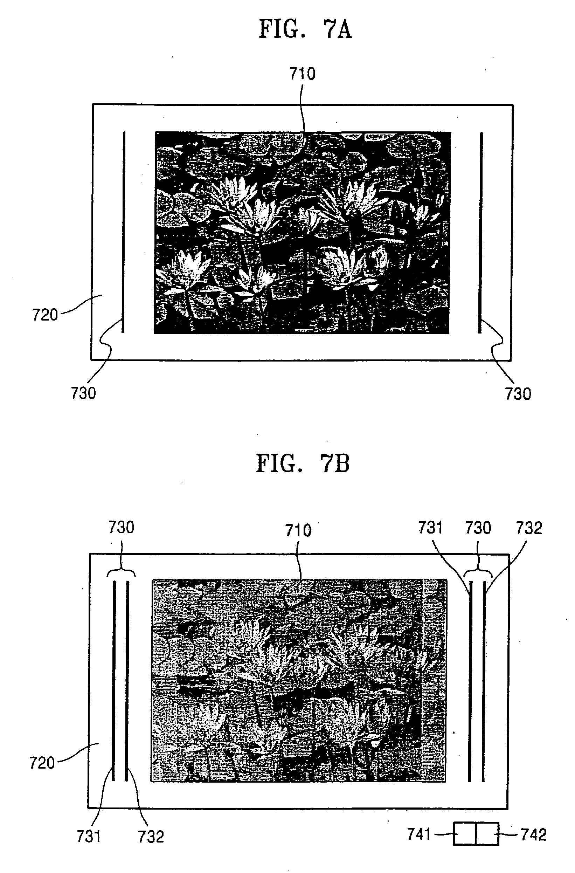

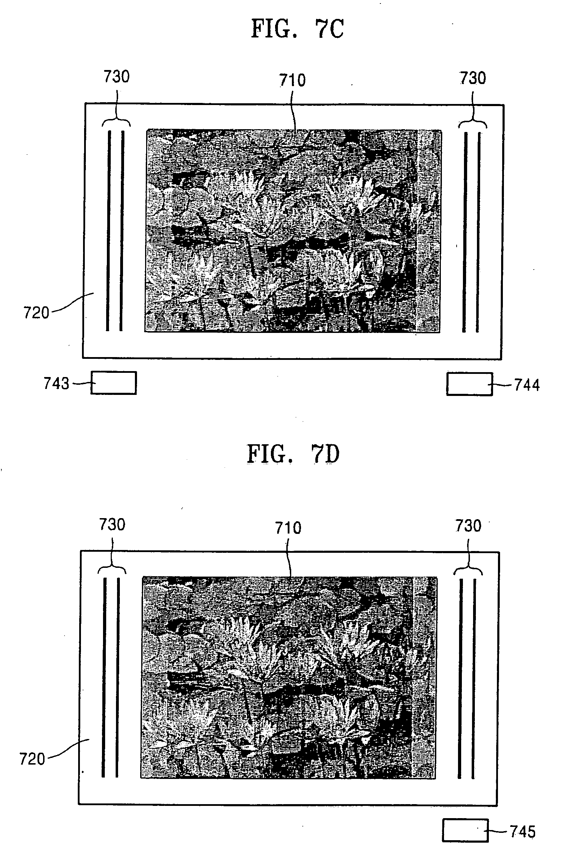

FIGS. 7A, 7B, 7C, and 7D are views for explaining the possible embodiments of the display portion 250 and the detection portion 270 shown in FIG. 2. In detail, FIG. 7A shows images 710 and 730 when the image distortion phenomenon is not generated. FIGS. 7B through 7D show images 710 and 730 when the image distortion phenomenon is generated. The reference numerals 710, 720, and 730 indicate an image generated by the image signal, a screen constituting the display portion 250, and an image generated by the sensing signal IN1, respectively,

In the following signal 670, it is assumed that the sensing signal 670 is sporadically generated on the time of the non-signal section 624, the first separate time 672 matches the second separate time 674, and the responded phase of the optical scanner 310 changes in a constant pattern in the optical scanning section. The expression "the responded phase of the optical scanner 310 changes in a constant pattern" means that the position of the scanned light on the screen 320 changes at a constant speed.

It is assumed that two pulses separated in time exit as the sensing signal 670 in the non-signal section 624. The two pulses are referred to as a first pulse 675 and a second pulse 676.

The expression "the image distortion phenomenon is not generated" means that the originally anticipated phase difference remains unchanged at the present moment when the optical scanning is presently performed. On the contrary, the expression "the image distortion phenomenon is generated" means that the originally anticipated phase difference is changed at the present moment when the optical scanning is presently performed.

The first separate time 672 and the second separate time 674 are identical and the responded phase always changes in a constant pattern. Thus, while the optical scanning is performed, the image 710 of FIG. 7A that is not distorted or the image 710 of FIG. 7B that is distorted are generated according to the change in the phase difference.

In the case shown in FIG. 7A, since the originally anticipated phase difference remain unchanged at the present moment when the optical scanning is performed, an image 731 generated by the first pulse 675 and an image 732 generated by the second pulse 676 are formed on the screen 320 to overlap each other. In this case, the image 730 generated by the sensing signal 670 is formed as a single line on the screen 320.

In the cases shown in FIGS. 7B through 7D, since the originally anticipated phase difference is changed at the present moment when the optical scanning is performed. The image 731 generated by the first pulse 675 and the image 732 generated by the second pulse 676 are formed on the screen 320 to be deviated from each other. The image 730 generated by the sensing signal 670 is formed on the screen 320 as two lines.

The detection portion 260 may include a plurality of detection devices as shown in FIG. 7B or a single detection device as shown in FIG. 7C or FIG. 7D. Reference numbers 741 through 745 denote detection devices. In detail, the detection device 741 or 742 can detect only one sensing signal 670. For example, the detection device 741 or 742 can detect only the first pulse 675 or the second pulse 676. Also, each of the detection devices 743 through 745 can detect a plurality of sensing signal 670. For example, each of the detection devices 743 through 745 can detect both first and second pulses 675 and 676.

Since the image 730 generated by the sensing signal 670 provides an unpleasant feeling to a user who desires to view the image 710 generated by the image signal 620, a portion where the image 730 generated by the sensing signal 670 is formed needs to be covered on the screen 720.

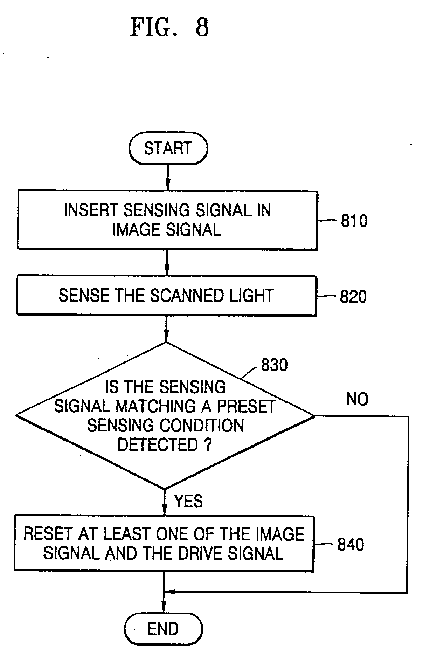

FIG. 8 is a flow chart for explaining a method of preventing the distortion of an image according to an embodiment of the present invention. The method of preventing the distortion of an image includes the operations of generating a scanning signal and scanning light corresponding to the scanning signal (Operation 810), detecting the scanned light and determining the presence of the generation of the distortion of an image (Operations 820 and 830), and resetting a drive signal or an image signal (Operation 840).

The signal insertion portion 230 inserts the sensing signal IN1 in the image signal to generate the scanning signal. The scanning portion 240 generates light corresponding to the generated scanning signal and scans the generated light onto the screen 320 (Operation 810).

The detection portion 260 detects the sensing signal IN1 by sensing the scanning light (Operation 820). After Operation 820, the sensing condition reflection portion 270 checks whether the sensing signal IN1 matching a sensing condition is detected and determines whether the distortion of an image has occurred (Operation 830).

When the checking portion of the sensing condition reflection portion 270 determines that the sensing signal IN1 matching the sensing condition is not detected in Operation 830, the feedback portion of the sensing condition reflection portion 270 resets at least one of the phases of the drive signal and the image signal (Operation 840).

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, codes, and code segments for accomplishing the present invention can be easily construed by programmers skilled in the art to which the present invention pertains.

While this invention has been particularly shown and described with reference to preferred embodiments thereof, it will be understood by those skilled in the art that various changes in form and details may be made therein without departing from the scope of the invention as defined by the appended claims.

As described above, in the apparatus and method for preventing the distortion of an image according to the present invention, in spite that the resonance frequency unexpectedly changes according to an inevitable change in the temperature of the optical scanner, an image can be generated as if no change has occurred, by reflecting in real time the result of the change in the image signal or the drive signal. Thus, a user can always view an image that is not distorted.

## Claims

1. An apparatus for preventing the distortion of an image comprising:
a signal insertion portion arranged to insert a sensing signal in an image signal that has information on an image, and to output the image signal in which the sensing signal is inserted as a scanning signal;
a scanning portion arranged to generate light corresponding to the scanning signal, and to scan the light while operating in response to a drive signal that determines a direction for scanning the light;
a detection portion arranged to sense the scanned light and detecting the sensing signal; and
a sensing condition reflection portion arranged to check whether the sensing signal matching a preset sensing condition is detected, and to reset at least one of the image signal and the drive signal in response to a result of the check.

2. The apparatus as claimed in claim 1, wherein the signal insertion portion is arranged to insert the sensing signal in a non-signal section of the image signal.

3. The apparatus as claimed in claim 1 or 2, arranged to sporadically generate the sensing signal.

4. The apparatus as claimed in claim 3, wherein a present sensing signal has a different amplitude from a preceding sensing signal.

5. The apparatus as claimed in any preceding claim, wherein the sensing condition is at least one of detection time and detected magnitude.

6. The apparatus as claimed in any preceding claim, wherein the scanning portion is arranged to scan the light in a bidirectional scanning method.

7. The apparatus as claimed in any preceding claim, wherein the detection portion comprises a plurality of detection devices, the detection devices being separated from one another and detecting the sensing signal.

8. The apparatus as claimed in any of claims 1 to 6, wherein the detection portion comprises a single detection device to detect the sensing signal.

9. The apparatus as claimed in any preceding claim, wherein the sensing condition reflection portion is arranged to reset at least one of the phases of the image signal and the drive signal in response to the result of the check.

10. The apparatus as claimed in any preceding claim, further comprising a display portion arranged to receive the scanned light and displaying the image.

11. The apparatus as claimed in any preceding claim, wherein a frequency of the drive signal is a resonance frequency of the scanning portion.

12. A method for preventing the distortion of an image, the method comprising:
inserting a sensing signal in an image signal that has information on an image, and generating the image signal in which the sensing signal is inserted as a scanning signal;
generating light corresponding to the scanning signal, and scanning the light while being controlled by a drive signal that determines a direction for scanning the light;
sensing the scanned light and detecting the sensing signal;
determining whether the sensing signal matching a preset sensing condition is detected; and
when the sensing signal matching the preset sensing condition is not detected, resetting at least one of the image signal and the drive signal.

13. The method as claimed in claim 12, wherein, in the inserting of the sensing signal in an image signal, the sensing signal is inserted in a non-signal section of the image signal.

14. The method as claimed in claim 12 or 13, wherein, in the inserting of the sensing signal in an image signal, a sensing signal that is sporadically generated is inserted in the image signal to generate the scanning signal.

15. The method as claimed in any of claims 12 to 14, wherein, in the scanning of the light, the light is scanned in a bidirectional scanning method.

16. The method as claimed in any of claims 12 to 15, wherein, in the resetting of at least one of the image signal and the drive signal, when the sensing signal matching the preset sensing condition is not detected, at least one of the phases of the image signal and the drive signal is reset.

17. The method as claimed in any of claims 12 to 16, further comprising receiving the scanned light and displaying the image.

18. A computer-readable recording medium recording a program for causing a computer to perform a method for preventing the distortion of an image which comprises a method according to any of claims 12 to 17.
